# EUROPEAN PATENT APPLICATION

(11) **EP 4 307 449 A1**
(43) Date of publication of application: **17.01.2024**
(21) Application number: 22919338.8
(22) Date of filing: 11.01.2022
(51) Int. Cl.: H01M 50/271, H01M 50/258

(54) **BATTERY HOUSING STRUCTURE AND MANUFACTURING METHOD THEREFOR, BATTERY, AND ELECTRIC DEVICE**

(71) Applicant: Contemporary Amperex Technology Co., Limited, Ningde, Fujian 352100 (CN)
(72) Inventor: HUANG, Siying, Ningde, Fujian 352100 (CN); LI, Long, Ningde, Fujian 352100 (CN); WU, Shengkai, Ningde, Fujian 352100 (CN); HAN, Guan, Ningde, Fujian 352100 (CN); CHEN, Kaihua, Ningde, Fujian 352100 (CN)
(74) Representative: Rowlands, Stuart Michael
(86) International application number: PCT/CN2022/071232
(87) International publication number: WO 2023/133672

(57) **Abstract**

The invention provides a battery housing structure and a manufacturing method therefor, a battery, and an electric device. The battery housing structure comprises a housing, an end plate, and a first sealing member; the housing is a tubular structure having an opening at an end portion, the tubular structure being used for accommodating battery cells; the end plate is mounted at the end portion of the housing, the housing and the end plate jointly define an accommodating space, and the battery cells are arranged in the accommodating space; and the first sealing member is arranged between the end plate and the housing, so as to cause the accommodating space to have a property of being sealed. The housing of the present invention is an integrated-type tubular structure without any side plates, top plates, bottom plates, etc., and therefore sealing treatment is unnecessary; also, there are many types of machining methods for the housing. After a plurality of battery cells are placed in the housing structure, it is just necessary for the end plate to be sealed to the opening of the housing by means of the first sealing member to complete sealing treatment of a battery. As a consequence, the present invention facilitates remedying battery sealing complexity, and further facilitates improving battery production efficiency.

## Description

### TECHNICAL FIELD

This application relates to the technical field of lithium-ion batteries, and in particular, to a battery housing structure, a method for manufacturing same, a battery, and an electrical device.

### BACKGROUND

With the rapid development of new energy technologies, batteries are applied more extensively, and the safety of batteries has attracted much attention. During a safety test on a battery, one of the test items is an airtightness test. The airtightness of a battery needs to meet the requirement of protecting the battery against dust entry and moisture even if the battery is immersed in a liquid for a short time.

In the related art, a box structure for sealing a battery is relatively complicated, and the sealing process is relatively cumbersome.

### SUMMARY

This application is put forward in view of the above problems. An objective of this application is to optimize the sealing structure of a battery, so as to improve production efficiency of the battery.

To achieve the above objective, this application provides a battery housing structure, a method for manufacturing same, a battery, and an electrical device.

A first aspect of this application discloses a battery housing structure. A battery includes at least one battery cell. The battery housing structure includes a housing, an end plate, and a first sealing element. The housing is a tubular structure with an opening at an end, and the tubular structure is configured to accommodate the battery cell. The end plate is mounted at an end of the housing. The housing and the end plate jointly define an accommodation space. The battery cell is disposed in the accommodation space. The first sealing element is disposed between the end plate and the housing so that the accommodation space is hermetically sealed.

The battery housing structure in an embodiment of this application is relatively simple. The housing is a one-piece tubular structure without side plates, top plates, bottom plates, and the like, and therefore, does not need to undergo a sealing process. The housing may be processed in diverse ways. After a plurality of battery cells are put into the housing structure, the sealing of the battery can be performed by just fitting the end plate to the opening of the housing hermetically by use of the first sealing element. This reduces sealing complexity of the battery and improves production efficiency of the battery. In addition, the battery housing structure in this embodiment of this application is especially suitable for small-sized batteries. The battery packaged in the battery housing structure can achieve good sealing performance and avoid the problems of burrs, gas cavities, and cracks. In specific applications, such small-sized batteries may be combined to form a higher-power large battery to meet the practical requirement of a high power output. When the batteries are combined into a large battery, because each individual small-sized battery has already met the sealing requirement, the large battery does not need to undergo a sealing process anymore.

The battery housing structure according to some embodiments of this application may further possess the following additional technical features:

In some embodiments of this application, the end plate includes a plate body. The plate body is inserted in the opening of the housing. A tapered guide portion is disposed at an end of the plate body, the end being located deep inside the housing.

The guide portion disposed improves the convenience of mounting the end plate, and in turn, improves the sealing efficiency of the battery.

In some embodiments of this application, a mounting groove is created in the plate body. The first sealing element is disposed in the mounting groove.

With the first sealing element disposed in the mounting groove, during mounting of the end plate, the first sealing element is snap-fitted in the mounting groove, without generating relative movement on the surface of the plate body. This facilitates placement of the first sealing element in a correct sealing position, and in turn, improves the sealing effect. In addition, as the battery is used over time, the battery cell expands freely. During the continuous expansion of the battery cell, the battery cell squeezes the end plate outward, thereby displacing the end plate outward. The first sealing element is disposed in the mounting groove. Therefore, when the end plate is displaced outward, the first sealing element and the end plate move outward synchronously, and the first sealing element can still maintain a state of closely fitting the inside of the housing, thereby ensuring that the battery maintains good sealing performance during the whole lifespan of the battery.

In some embodiments of this application, the first sealing element includes a plurality of sealing lips. All the plurality of sealing lips closely abut an inner wall of the housing.

In these embodiments of this application, the plurality of lips further improve the sealing effect of the battery.

Preferably, the first sealing element includes three sealing lips, and the three sealing lips are arranged in parallel along a direction perpendicular to a plane of the opening.

With the three lips arranged in parallel, the end plate and the opening of the housing are sealed by three sealing lips, thereby further improving the sealing effect of the battery. However, if the number of sealing lips is excessive, the manufacturing process of the first sealing element may be more difficult, thereby being adverse to reducing cost.

In some embodiments of this application, a plurality of bulges are disposed on a surface of the first sealing element, the surface being in contact with the mounting groove.

The disposed bulges increase friction between the first sealing element and the mounting groove, thereby further avoiding relative movement of the first sealing element on the surface of the plate body, and in turn, improving the sealing effect.

In some embodiments of this application, the battery housing structure further includes a second sealing element. The second sealing element is located outside the first sealing element.

The disposed second sealing element provides double-layer sealing for the battery housing structure, thereby further improving the sealing effect for the battery.

Further, the end plate further includes a stopping flange disposed at an end of the plate body, the end being away from the battery cell. The stopping flange is bent so that a groove is jointly defined by the stopping flange and the plate body. The second sealing element is disposed in the groove.

The simple design of the flanged groove makes it convenient to fix the second sealing element to an end of the end plate, the end being away from the battery cell, thereby avoiding looseness of the second sealing element, and in turn, improving the reliability of the second sealing element.

Further, a stopper is disposed on an outer surface of the housing. The stopper abuts the stopping flange to limit an insertion depth of the plate body into the opening.

When the stopper contacts the stopping flange, it means that the opening of the housing has gone deep into the groove, and a specified clearance is ensured between the opening of the housing and the groove. In this way, the groove provides a specified space for accommodating the second sealing element. After the second sealing element such as a sealant is put in the groove, the end plate fitted onto the housing so that the opening of the housing is inserted into the groove. At this time, the stopper defines a specified clearance between the opening of the housing and the groove, thereby preventing an excessive compression force received by the sealant from the opening of the housing, and in turn, preventing the sealant from overflowing to cause sealing failure.

Definitely, if the second sealing element is a flat washer, the stopper can also prevent an excessive compression force on the flat washer, thereby preventing the flat washer from deforming excessively to cause sealing failure.

Further, the stopper is a first convex rib that extends along a length direction of the housing.

In this case, the stopper is the first convex rib, not only ensuring a specified clearance between the opening of the housing and the groove, but also serving as a reinforcing rib of the housing to increase the strength of the housing.

In some embodiments of this application, the end plate further includes a connecting portion. The connecting portion is disposed on a side of the stopping flange, the side being away from the plate body. A plurality of mounting holes are created in the connecting portion and configured to be connected to an external structure.

The battery housing structure of this application can be connected to an external component such as another battery or a control unit through the connecting portion on the end plate in a simple and convenient manner.

In some embodiments of this application, a recessed region is formed on a side of the plate body, the side being away from the battery cell. A sidewall of the recessed region is connected to the housing by rivetless riveting or by a fastener.

With the recessed region formed, the plate body is endowed with a specified wall thickness, thereby making it convenient to connect the end plate and the housing by rivetless riveting or by a fastener, and making it easy to avoid interference with a jig during the connection. In addition, the arrangement of recessed region reduces the material consumption of the end plate, and reduces cost.

Further, a reinforcing rib is disposed in the recessed region.

With the recessed region arranged, the plate body is caused to be a shell-like structure. The strength of the plate body is increased favorably by disposing a reinforcing rib in the recessed region.

Alternatively, in some other embodiments of this application, a positioning rod with a positioning hole is disposed in the recessed region and configured to be connected to an external jig.

In this way, it is convenient to exert a force on the end plate through the external jig, thereby further improving the convenience of mounting the end plate.

In some embodiments of this application, a second convex rib that extends along a length direction and/or width direction of the housing is further disposed on an outer surface of the housing. The second convex rib is configured to work together with an external structure to jointly define a heat dissipation channel.

In this way, the heat dissipation manner of the battery is provided through a simple rib design, thereby reducing the probability of battery temperature runaway.

A second aspect of this application discloses a battery. The battery includes the battery housing structure according to the first aspect and at least one battery cell. The battery cell is disposed in a tubular structure.

For the battery according to an embodiment of this application, the battery housing structure is relatively simple. The housing in the battery housing structure is a one-piece tubular structure without side plates, top plates, bottom plates, and the like, and therefore, does not need to undergo a sealing process. The housing may be processed in diverse ways. After a plurality of battery cells are put into the housing structure, the sealing of the battery can be performed by just fitting the end plate to the opening of the housing hermetically by use of the first sealing element. This reduces the sealing complexity of the battery, and improves the production efficiency of the battery. In addition, the battery according to this embodiment of this application may be a small-sized battery. When the battery is small in size, the size of a sealing interface of the battery is relatively small. In this case, the battery packaged in the battery housing structure can achieve good sealing performance and avoid the problems of burrs, gas cavities, and cracks. In specific applications, such small-sized batteries may be combined to form a higher-power large battery to meet the practical requirement of a high power output. When the batteries are combined into a large battery, because each individual small-sized battery has already met the sealing requirement, the large battery does not need to undergo a sealing process anymore.

In some embodiments of this application, the battery further includes a cable containment system assembly disposed in the battery housing structure. The cable containment system assembly includes a fender and a conductive connecting strip disposed on the fender. The conductive connecting strip is electrically connected to an electrode post of the battery cell.

The cable containment system assembly is a basic component of a battery module or a battery pack.

Athird aspect of this application discloses an electrical device. The electrical device includes the battery described above.

In the electrical device according to an embodiment of this application, the sealing structure of the battery used in a power supply system in the electrical device is relatively simple. The housing in the battery housing structure of the battery is a one-piece tubular structure without side plates, top plates, bottom plates, and the like, and therefore, does not need to undergo a sealing process. The housing may be processed in diverse ways. After a plurality of battery cells are put into the housing structure, the sealing of the battery can be performed by just fitting the end plate to the opening of the housing hermetically by use of the first sealing element. This reduces the sealing complexity of the battery, and improves the production efficiency of the battery.

A fourth aspect of this application discloses a method for manufacturing a battery housing structure, including:
providing a housing, where the housing is a tubular structure with an opening at an end;
providing an end plate, where the end plate is mounted at an end of the housing, the housing and the end plate jointly define an accommodation space, and a plurality of battery cells are disposed in the accommodation space; and
providing a first sealing element, where the first sealing element is disposed between the end plate and the housing so that the accommodation space is hermetically sealed.

The sealing structure of the battery housing structure manufactured by the method for manufacturing a battery housing structure according to this application is relatively simple. The housing in the battery housing structure is a one-piece tubular structure without side plates, top plates, bottom plates, and the like, and therefore, does not need to undergo a sealing process. The housing may be processed in diverse ways. After a plurality of battery cells are put into the housing structure, the sealing of the battery can be performed by just fitting the end plate to the opening of the housing hermetically by use of the first sealing element. This reduces the sealing complexity of the battery, and improves the production efficiency of the battery.

### BRIEF DESCRIPTION OF DRAWINGS

FIG. 1 is a schematic structural diagram of a vehicle as an electrical device according to an embodiment of this application;
FIG. 2 is a schematic structural diagram of a battery housing structure according to an embodiment of this application;
FIG. 3 is a schematic structural diagram of a battery according to an embodiment of this application;
FIG. 4 is a schematic structural diagram of a battery cell in the prior art;
FIG. 5 is a close-up view of a part A shown in FIG. 2;
FIG. 6 is a close-up view of a part B shown in FIG. 2;
FIG. 7 is a schematic structural diagram of an end plate according to an embodiment of this application;
FIG. 8 is a close-up view of a part C shown in FIG. 6;
FIG. 9 is a schematic assembling drawing of an end plate and a first sealing element according to an embodiment of this application;
FIG. 10 is a schematic partial sectional view of sealing between an end plate and an opening of a housing according to an embodiment of this application;
FIG. 11 is a schematic structural diagram of a housing according to an embodiment of this application; and

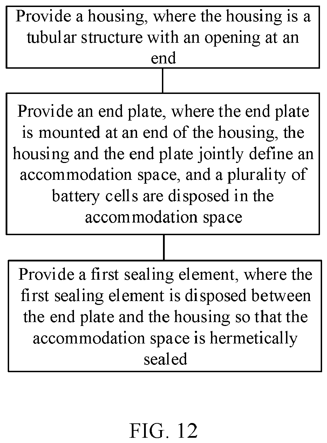

FIG. 12 is a flowchart of a method for manufacturing a battery housing structure according to an embodiment of this application.

### List of reference numerals:

1-vehicle; 10-battery; 30-controller; 40-motor; 100-battery cell; 110-end cap; 120-shell; 130-electrode assembly; 140-electrode post; 200-battery housing structure; 210-housing; 211-stopper; 212-first convex rib; 213-second convex rib; 214-opening; 220-end plate; 221-plate body; 222-guide portion; 223-mounting groove; 224-stopping flange; 225-groove; 226-connecting portion; 2261-mounting hole; 227-recessed region; 228-reinforcing rib; 229-positioning rod; 2291-positioning hole; 230-first sealing element; 231-lip; 232-bulge; 240-second sealing element; 250-fastener; 260-plug; 2601-through-hole; 2602-connecting piece; 270-dielectric film; 400-cable containment system assembly; 410-fender; 420-conductive connecting strip.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

With the rapid development of new energy technologies, batteries are applied more extensively, and the safety of batteries has attracted much attention. During a safety test on a battery, one of the test items is an airtightness test. The airtightness of a battery needs to meet the requirement of protecting the battery against dust entry and moisture even if the battery is immersed in a liquid for a short time.

Batteries are classed into a battery cell, a battery module, and a battery pack in terms of size. Currently, approaches to forming a battery pack generally fall into two categories. One approach is that a plurality of battery cells are connected in series and parallel to form a battery module, and then a plurality of battery modules are connected in series and parallel to form a battery pack. The other approach is that a plurality of battery cells are connected in series and parallel to form a battery pack directly.

In the related art, manufacturers usually seal the battery at the battery pack level. For example, a battery pack includes an external box. A plurality of battery modules or battery cells are located in the box. The box includes an upper cover, a side plate, a bottom plate, and the like. Connected by a sealant, welding, a fastener, or the like, the side plate, bottom plate, and upper cover are fixed together to form a hermetic space and exert a sealing effect on the battery cell or battery module in the hermetic space. The sealing process for the sealed box formed in this way is relatively cumbersome, and is prone to problems such as a long curing time of the sealant and giving rise to burrs, gas cavities, and cracks during welding, thereby being adverse to ensuring a good sealing effect for the battery.

The inventor has noticed that a root cause of various problems in above sealing process is the relatively large size of the sealing interface. If the size of the sealing interface is greatly reduced, many problems can be easily solved. Based on such a concept, the inventor is committed to developing a small-sized battery. This battery is hermetically sealed inherently. Due to a small size of the sealing interface, this battery does not need to be coated with a sealant in a large area, and does not need to be connected by welding, a fastener, or the like, thereby avoiding the problems of burrs, gas cavities, and cracks. In addition, the size of the sealing interface is greatly reduced, thereby also improving the sealing effect.

In addition, in specific applications, such small-sized batteries may be combined to form a higher-power large battery to meet the practical requirement of a high power output. When the batteries are combined into a large battery, because each individual small-sized battery has already met the sealing requirement, the large battery does not need to undergo a sealing process anymore.

Specifically, the inventor discloses a battery housing structure 200 and a method for manufacturing same. The battery housing structure 200 according to an embodiment of this application is mainly applied to the small-sized batteries, and is configured to implement sealing for the small-sized batteries. The battery housing structure 200 is relatively simple in structure and reliable in terms of sealing performance, thereby reducing complexity of a sealing process of a battery 10 and improving production efficiency of the battery 10.

Based on the above battery housing structure 200, the inventor further discloses a battery 10. The battery 10 is relatively small-sized and of relatively high sealing performance.

The battery 10 in this embodiment of this application is applicable to, but not limited to use in, electrical devices such as a vehicle, watercraft, or aircraft. The electrical devices may be, but are not limited to, a mobile phone, a tablet, a notebook computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

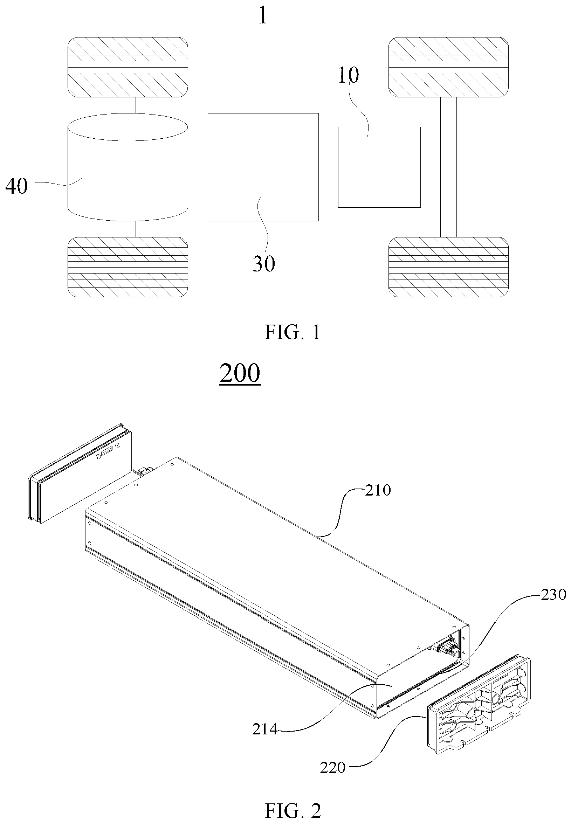

As shown in FIG. 1, which is a schematic structural diagram of a battery 10 according to an embodiment of this application for use in a vehicle 1 as an electrical device. The vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A motor 40, a controller 30, and a battery 10 may be disposed inside the vehicle 1. The controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may serve as an operating power supply of the vehicle 1 to power a circuit system of the vehicle 1. For example, the battery may be configured to meet operating power usage requirements of the vehicle 1 that is being started or navigated or running. In another embodiment of this application, the battery 10 serves not only as an operating power supply of the vehicle 1, but may also serve as a driving power supply of the vehicle 1 to provide driving power for the vehicle 1 in place of or partly in place of fuel oil or natural gas.

The battery 10 referred to herein means a unitary physical module that includes one or more battery cells 100 to provide a higher voltage and a higher capacity. For example, batteries 10 referred to in this application may include a battery module, a battery pack, and the like. The battery 10 typically further includes a box configured to package one or more battery cells 100. The box prevents liquid or other foreign matters from affecting the charging or discharging of the battery cell 100. The battery housing structure 200 according to this embodiment of this application is the box mentioned above.

A plurality of battery cells 100 may be connected together in series and/or parallel by electrode posts 140, so as to be applied in various scenarios. A battery module is formed by electrically connecting a specified number of battery cells 100 together and putting the battery cells into a frame, so as to protect the battery cells 100 against external impact, heat, vibration, and the like. A battery pack is a battery system in a final state mounted in an electric vehicle. Currently, most of battery packs are made by assembling various control and protection systems such as a battery management system (BMS) and a thermal management part on one or more battery modules. With advancement of technologies, the battery module is omissible. That is, the battery pack is directly formed from battery cells. This improvement decreases the quantity of parts significantly while enhancing a gravimetric energy density and a volumetric energy density of the battery system. Batteries 10 referred to herein include the battery module or the battery pack.

In this application, a battery cell 100 may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell 100 may be in a cylindrical shape, a flat shape, a cuboidal shape, or other shapes, without being limited herein. Depending on the form of packaging, the battery cells 100 are typically classed into three types: cylindrical battery cell, prismatic battery cell, and pouch-type battery cell. The type of the battery cell is not limited in an embodiment of this application.

As shown in FIG. 2 to FIG. 5, a first aspect of this application discloses a battery housing structure 200. A battery 10 includes at least one battery cell 100. The battery housing structure 200 includes a housing 210, an end plate 220, and a first sealing element 230. The housing 210 is a tubular structure with an opening 214 at an end. The tubular structure is configured to accommodate the battery cell 100. The end plate 220 is mounted at an end of the housing 210. The housing 210 and the end plate 220 jointly define an accommodation space. The battery cell 100 is disposed in the accommodation space. The first sealing element 230 is disposed between the end plate 220 and the housing 210 so that the accommodation space is hermetically sealed.

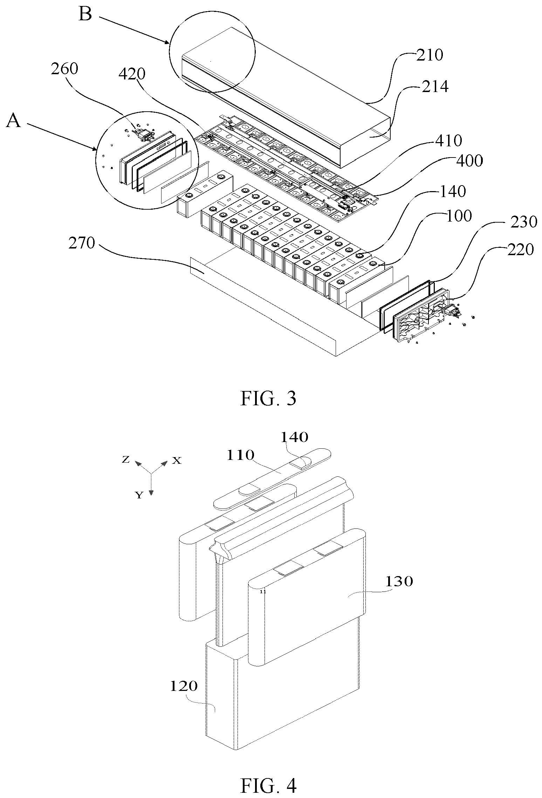

Referring to FIG. 4, the battery cell 100 is a minimum unit for implementing the charge-and-discharge function of the battery 10. The battery cell 100 generally includes an end cap 110, a shell 120, an electrode assembly 130, and other functional components such as an insulation layer. The end cap 110 is a component that fits and covers the opening of the shell 120 to isolate the internal environment of the battery cell 100 from the external environment. Functional components such as an electrode post 140 may be disposed on the end cap 110. The shell 120 is a component configured to accommodate the electrode assembly 130 to form a battery cell 100. Without limitation, the shape of the end cap 110 may be adapted to the shape of the shell 120 to fit the shell 120. An electrolyte solution and other internal structures are further included in the shell 120. The shell 120 may be made of various materials such as iron shell, aluminum shell, and stainless steel shell. The electrode assembly 130 is a component that reacts electrochemically in the battery cell 100. One or more electrode assemblies 130 may be included in the shell 120. The electrode assembly 130 is mainly formed by winding or stacking a positive electrode plate and a negative electrode plate. A separator is usually disposed between the positive electrode plate and the negative electrode plate. The separator is configured to isolate the positive electrode plate from the negative electrode plate so that insulation is implemented but ions can be freely shuttled between the positive electrode plate and the negative electrode plate to form an ionically conductive loop.

The housing 210 means a protective shell disposed outside the battery to protect the battery cell 100 against collisions and impact. In this application, the housing 210 further serves as a part of the sealing structure. The housing 210 may be made of various materials such as a metal material like aluminum and steel. Preferably, aluminum may be used to reduce the weight of the housing 210. Alternatively, the material of the housing may be an aluminum alloy material, or a new lightweight composite material currently available in the market, such as a glass fiber reinforced composite material or a carbon fiber reinforced composite material.

The tubular structure means a structure that is hollow inside and walled with a specified thickness. The interior of the tubular structure may be configured to accommodate the battery cell 100 and other functional components. The "tubular shape" is used for describing the overall shape of the housing 210, and may represent a rectangular tube (with a cross-section being rectangular or square), a round tube (with a cross-section being circular), or a special-shaped tube (with a cross-section being not circular, rectangular, or square). The housing 210 may be formed by various processes such as machining, casting, or extrusion. A person skilled in the art may choose flexibly in view of factors such as cost and ease of processing.

The end plate 220 means a roughly plate-shaped structural component that fits the opening 214 of the housing 210. A main function of the end plate is to block the opening 214 at the end of the housing 210. The end plate 220 may be made of a material such as aluminum, stainless steel, or the like. Preferably, the end plate 220 may be made of aluminum. The plastic deformability of aluminum is higher than that of stainless steel. When the battery cell 100 inside the housing 210 expands due to charging and discharging, the end plate 220 can provide a space for deformation to reduce internal pressure.

The end plate 220 is mounted at the end of the housing 210, that is, the end plate 220 is mounted at the opening 214 of the housing 210.

The first sealing element 230 is a component configured to seal off a clearance between the structural components to prevent air or liquid from passing between the structural components. In this application, the first sealing element 230 is disposed at a junction between the end plate 220 and the housing 210, so that fluid or solid particulates are unable to pass through the junction between the end plate 220 and the housing 210. Therefore, fluid and solid particulates are prevented from entering the battery 10. Commonly seen sealing elements include O-rings, lip-shaped sealing rings, flat washers, and the like. An O-ring and a lip sealing ring serve a sealing function through compressive deformation of a sealing port of the ring. A flat washer serves a sealing function through extrusive deformation of an end face of the flat washer. Common materials of the sealing element include fluororubber, hydrogenated butyronitrile rubber, copper, and the like. Alternatively, the sealants commonly used in industry may be used as sealing elements to perform sealing. The first sealing element 230 in this embodiment of this application may be a lip-shaped sealing ring.

The battery housing structure 200 in this embodiment of this application is relatively simple. The housing 210 is a one-piece tubular structure without discrete side plates, top plates, bottom plates, and the like, and therefore, does not need to undergo a sealing process. The housing 210 may be processed in diverse ways. After a plurality of battery cells 100 are put into the housing 210 structure, the sealing of the battery 10 can be performed by just fitting the end plate 220 to the opening 214 of the housing 210 hermetically by use of the first sealing element 230. This reduces the sealing complexity of the battery 10 and improves the production efficiency of the battery 10. In addition, the battery housing structure 200 in this embodiment of this application is especially suitable for small-sized batteries 10. The battery 10 packaged in the battery housing structure 200 can achieve good sealing performance and avoid the problems of burrs, gas cavities, and cracks. In specific applications, such small-sized batteries may be combined to form a higher-power large battery to meet the practical requirement of a high power output. When the batteries are combined into a large battery, because each individual small-sized battery has already met the sealing requirement, the large battery does not need to undergo a sealing process anymore.

As shown in FIG. 3, FIG. 7, and FIG. 8, in some embodiments of this application, the end plate 220 includes a plate body 221. The plate body 221 is inserted in the opening 214 of the housing 210. A tapered guide portion 222 is disposed at an end of the plate body 221, the end being located deep inside the housing 210.

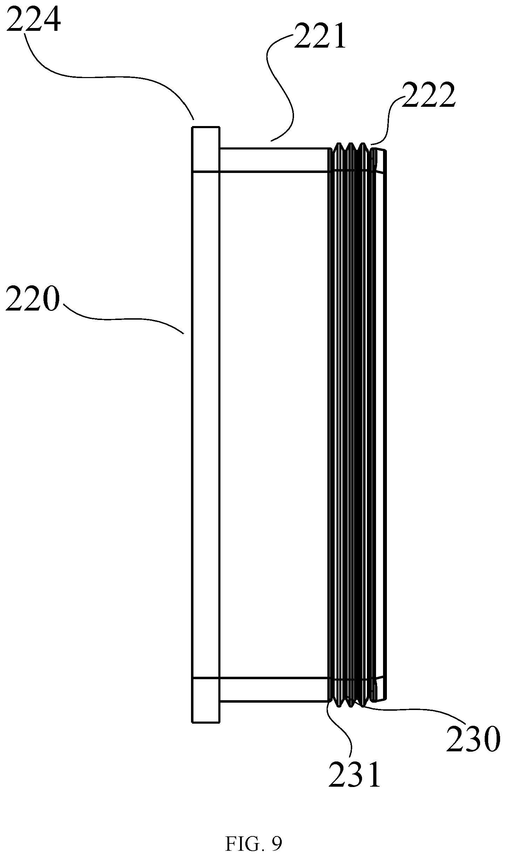

The plate body 221 is a part of the end plate 220, the part being deep into the opening 214 of the housing 210. As shown in FIG. 9, the guide portion 222 is a tapered reverse bevel formed by machining.

The guide portion 222 disposed improves the convenience of mounting the end plate 220, and in turn, improves the sealing efficiency of the battery 10.

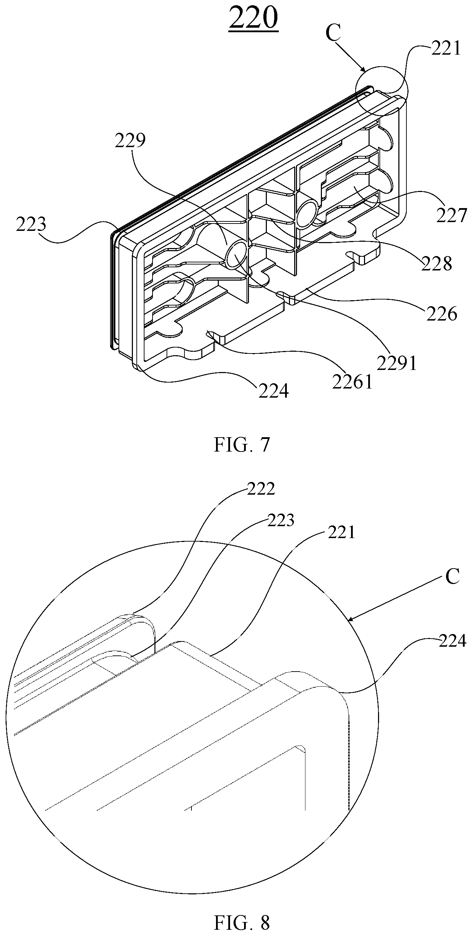

As shown in FIG. 8 and FIG. 9, in some embodiments of this application, a mounting groove 223 is created in the plate body 221. The first sealing element 230 is disposed in the mounting groove 223.

The mounting groove 223 is a groove machined around the plate body 221 in a single revolution. Generally, the surface of the groove needs to be smooth and flat without burrs, so that the surface of the first sealing element 230 closely fits the mounting groove 223 to ensure a good sealing effect and prevent the burrs from damaging the first sealing element 230.

With the first sealing element 230 disposed in the mounting groove 223, during mounting of the end plate 220, the first sealing element 230 is snap-fitted in the mounting groove 223 to avoid relative movement on the surface of the plate body 221. This facilitates placement of the first sealing element 230 in a correct sealing position, and in turn, improves the sealing effect. In addition, as the battery 10 is used over time, the battery cell 100 expands freely. During the continuous expansion of the battery cell 100, the battery cell 100 squeezes the end plate 220 outward, thereby displacing the end plate 220 outward. The first sealing element 230 is disposed in the mounting groove 223. Therefore, when the end plate 220 is displaced outward, the first sealing element 230 and the end plate 220 move outward synchronously, and the first sealing element 230 can still maintain a state of closely fitting the inside of the housing 210, thereby ensuring that the battery 10 maintains good sealing performance during the whole lifespan of the battery 10.

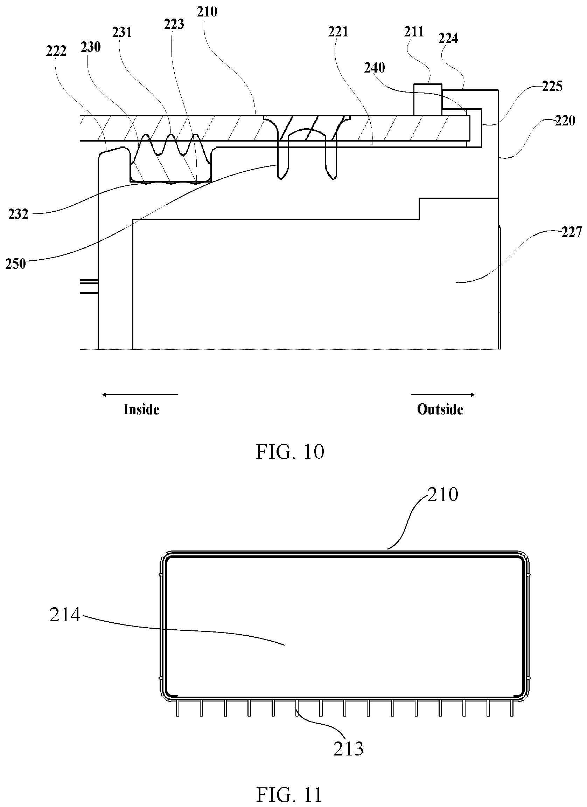

As shown in FIG. 9 and FIG. 10, in some embodiments of this application, the first sealing element 230 includes a plurality of sealing lips 231. All the plurality of sealing lips 231 closely abut an inner wall of the housing 210.

The lips 231 are a main structure configured on the first sealing element 230 to seal a junction surface between the end plate 220 and the opening 214, and are elastic. By rationally designing the size of the end plate 220, the size of the opening 214, and the size of the first sealing element 230, the sealing lips 231 are compressed by the inner wall of the housing 210 and the plate body 221 during assembling, so that the junction surface is sealed through compressive deformation.

In these embodiments of this application, the plurality of lips 231 further improve the sealing effect of the battery 10.

Preferably, the first sealing element 230 includes three sealing lips 231, and the three sealing lips 231 are arranged in parallel along a direction perpendicular to a plane of the opening 214.

With the three lips 231 arranged in parallel, the end plate 220 and the opening 214 of the housing 210 are sealed by three sealing lips 231, thereby further improving the sealing effect of the battery 10. However, if the number of sealing lips 231 is excessive, the manufacturing process of the first sealing element 230 may be more difficult, thereby being adverse to reducing cost.

In some embodiments of this application, a plurality of bulges 232 are disposed on a surface of the first sealing element 230, the surface being in contact with the mounting groove 223.

The bulges 232 may be a plurality of independent dot structures, or a continuous corrugated structure on a surface as shown in FIG. 10.

The disposed bulges 232 increase friction between the first sealing element 230 and the mounting groove 223, thereby further preventing the first sealing element 230 from sliding out of the mounting groove 223, and in turn, improving the sealing effect.

As shown in FIG. 10, in some embodiments of this application, the battery housing structure 200 further includes a second sealing element 240. The second sealing element 240 is located outside the first sealing element 230.

The second sealing element 240 means a sealing element configured to perform secondary hermetic protection for the battery housing structure 200. The second sealing element 240 may be a sealant, a sealing flat washer, a sealing ring, or the like. The type of the second sealing element is not limited herein. The "outside" means a side of the end plate 220, the side being away from the housing 210.

The disposed second sealing element 240 provides double-layer sealing for the battery housing structure 200, thereby further improving the sealing effect for the battery 10.

Further, as shown in FIG. 7 and FIG. 10, the end plate 220 further includes a stopping flange 224 disposed at an end of the plate body 221, the end being away from the battery cell 100. The stopping flange 224 is bent so that a groove 225 is jointly defined by the stopping flange and the plate body 221. The second sealing element 240 is disposed in the groove 225.

The groove 225 is configured to accommodate the second sealing element 240. For example, a copper-ring flat washer in the same shape as the groove 225 is fitted to the groove 225. The opening 214 of the housing 210 is pressed against the flat washer to deform the flat washer, so as to seal the end plate 220 and the housing 210 for a second time. Alternatively, the groove 225 is filled with a sealant, and the end plate 220 and the housing 210 are sealed for a second time by the sealant, and so on.

The simple design of the flanged groove 225 makes it convenient to fix the second sealing element 240 to an end of the end plate 220, the end being away from the battery cell 100, thereby avoiding looseness of the second sealing element 240, and in turn, improving the reliability of the second sealing element 240.

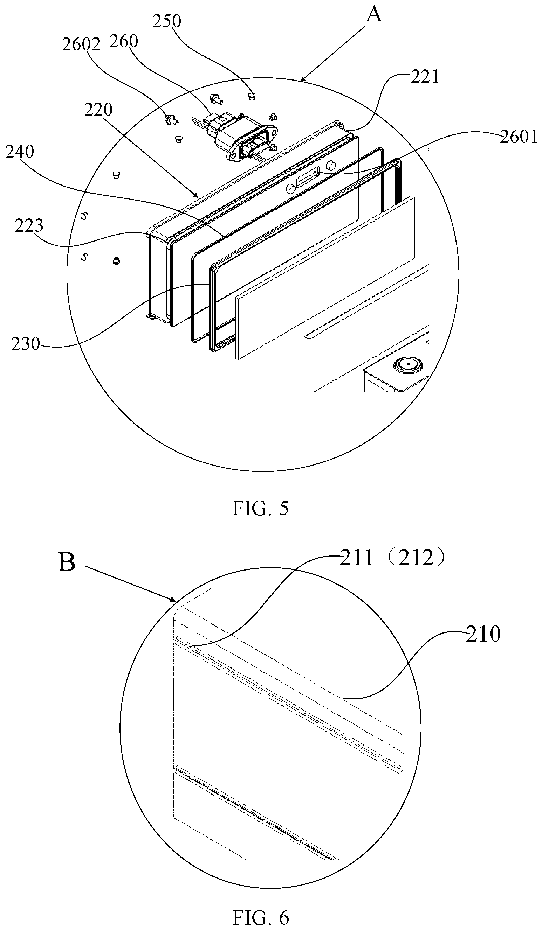

Further, as shown in FIG. 6, a stopper 211 is disposed on an outer surface of the housing 210. The stopper 211 abuts the stopping flange 224 to limit an insertion depth of the plate body 221 into the opening 214.

The stopper 211 is a component configured to define a positional relationship of the opening 214 of the housing 210 going deep into the groove 225 of the end plate 220.

When the stopper 211 contacts the stopping flange 224, it means that the opening 214 of the housing 210 has gone deep into the groove 225, and a specified clearance is ensured between the opening 214 of the housing 210 and the groove 225. In this way, the groove 225 provides a specified space for accommodating the second sealing element 240. After the second sealing element 240 such as a sealant is put in the groove 225, the end plate 220 is fitted to the housing so that the opening 214 of the housing 210 is inserted into the groove 225. At this time, the stopper 211 defines a specified clearance between the opening 214 of the housing 210 and the groove 225, thereby preventing an excessive compression force received by the sealant from the opening 214 of the housing 210, and in turn, preventing the sealant from overflowing to cause sealing failure.

Definitely, if the second sealing element 240 is a flat washer, the stopper 211 can also prevent an excessive compression force on the flat washer, thereby preventing the flat washer from deforming excessively to cause sealing failure.

Further, the stopper 211 is a first convex rib 212 that extends along a length direction of the housing 210.

The length direction of the housing 210 is a direction perpendicular to a plane of the opening 214 of the housing 210. The first convex rib 212 is a structure extending along the direction perpendicular to the plane of the opening 214 of the housing 210, formed on the outer surface of the housing 210, and protruding away from the outer surface of the housing 210.

In this case, the stopper 211 is the first convex rib 212, not only ensuring a specified clearance between the opening 214 of the housing 210 and the groove 225, but also serving as a reinforcing rib 228 of the housing 210 to increase the strength of the housing 210.

As shown in FIG. 7, in some embodiments of this application, the end plate 220 further includes a connecting portion 226. The connecting portion 226 is disposed on a side of the stopping flange 224, the side being away from the plate body 221. A plurality of mounting holes 2261 are created in the connecting portion 226 and configured to be connected to an external structure.

The connecting portion 226 is a part of the end plate 220, the part being connected to an external structure. For example, the connecting portion 226 may be a structure formed by extending the stopping flange 224 on the end plate toward the side away from the plate body 221. The extension shape may be set flexibly depending on the external structure that needs to be connected.

The battery housing structure 200 of this application can be connected to an external component such as another battery 10 or a control unit through the connecting portion 226 on the end plate 220 in a simple and convenient manner.

As shown in FIG. 7 and FIG. 10, in some embodiments of this application, a recessed region 227 is formed on a side of the plate body 221, the side being away from the battery cell 100. A sidewall of the recessed region 227 is connected to the housing 210 by rivetless riveting or by a fastener 250.

One end of the plate body 221 goes deep into the opening 214 of the housing 210, and another end of the plate body includes a recessed region 227. In other words, the plate body 221 is a shell-like structure with a specified wall thickness.

The rivetless riveting is a way of connecting plates together by applying a pressure to the plates to locally deform the plates by use of an inherent cold deformation ability of the plates, and is a way of joining plates without using an additional connecting piece. This connection manner implements optimal connection of two or more plate layers of different thicknesses and different materials without requiring spot welding or riveting.

Connecting by a fastener 250 is a way of connecting plates by using an additional connecting piece such as a bolt, a rivet, a double-end stud, or a nut. For example, the fastener 250 in an embodiment of this application may be a rivet.

With the recessed region 227 formed, the plate body 221 is endowed with a specified wall thickness, thereby making it convenient to connect the end plate 220 and the housing 210 by rivetless riveting or by a fastener 250, and making it easy to avoid interference with a jig during the connection. In addition, the arrangement of recessed region 227 reduces the material consumption of the end plate 220, and reduces cost.

Further, as shown in FIG. 7, a reinforcing rib 228 is disposed in the recessed region 227.

The reinforcing rib 228 is a rib by which one sidewall of the recessed region 227 is connected to another sidewall.

With the recessed region 227 arranged, the plate body 221 is caused to be a shell-like structure. The strength of the plate body 221 is increased favorably by disposing a reinforcing rib 228 in the recessed region 227.

As shown in FIG. 7, in some embodiments of this application, a positioning rod 229 with a positioning hole 2291 is disposed in the recessed region 227 and configured to be connected to an external jig.

The positioning rod 229 is a positioning structure by which an external jig is connected to the end plate 220. A positioning hole 2291 is created in the positioning rod 229. The external jig is inserted into the end plate 220 through the positioning hole 2291.

In this way, it is convenient to exert a force on the end plate 220 through the external jig, thereby further improving the convenience of mounting the end plate 220.

As shown in FIG. 11, in some embodiments of this application, a second convex rib 213 that extends along a length direction and/or width direction of the housing is further disposed on an outer surface of the housing. The second convex rib 213 is configured to work together with an external structure to jointly define a heat dissipation channel.

The second convex rib 213 is a structure extending along a direction perpendicular or parallel to the plane of the opening 214 of the housing 210, formed on the outer surface of the housing 210, and protruding away from the outer surface of the housing 210.

There may be a plurality of second convex ribs 213. For example, a plurality of second convex ribs 213 are in a straight strip shape, and arranged parallel to each other along a direction perpendicular or parallel to the plane of the opening 214 of the housing 210; or, each second convex rib 213 is in a curved shape that turns from the direction perpendicular to the plane of the opening 214 of the housing 210 to the direction parallel to the plane of the opening 214 of the casing 210. When the second convex rib 213 on the outer surface of the housing 210 abuts an external box 300 or a planar structure such as a plate, a plurality of linear or curved heat dissipation channels can be defined jointly by the second convex ribs and the external box or planar structure. In this way, the heat dissipation manner of the battery 10 is provided through a simple design of convex ribs, thereby reducing the probability of thermal runaway of the battery 10.

According to some embodiments of this application, preferably, this application provides a battery housing structure 200. The battery housing structure 200 includes a housing 210, an end plate 220, a first sealing element 230, and a second sealing element 240.

On different sides on the outer surface of the housing 210, a first convex rib 212 and a second convex rib 213 are integrally disposed respectively along the length direction. The interior of the housing 210 is configured to accommodate the battery cell 100. The end plate 220 includes a plate body 221 and a stopping flange 224 located at an end of the plate body 221, the end being away from the battery cell 100. A recessed region 227 is formed on a side of the stopping flange 224. A reinforcing rib 228 and a positioning hole 2291 are disposed in the recessed region 227. The stopping flange 224 of the end plate 220 extends on one side to form a connecting portion 226. A mounting groove 223 is created in an end of the plate body 221, the end going deep into the housing 210. In addition, a tapered guide portion 222 is disposed at a part of the plate body 211, the part being closer to the opening 214 of the housing 210. The first sealing element 230 includes three sealing lips 231. The stopping flange 224 of the end plate 220 is bent so that a groove 225 is jointly defined by the stopping flange and the plate body 221. The second sealing element 240 may be disposed in the groove 225.

A sealing process of the battery housing structure 200 in an embodiment of this application includes: mounting the first sealing element 230 in the mounting groove 223 of the end plate 220; placing the second sealing element 240 in the groove 225 of the end plate 220; putting the plate body 221 of the end plate 220 into the opening 214 of the housing 210 through the reverse bevel; and then inserting an external jig into the positioning hole 2291, so that the end plate 220 is squeezed by the external jig into the opening 214 of the housing 210 until the stopping flange 224 abuts the first convex rib 212 that plays a limiting role. In this way, the sidewall of the recessed region 227 is connected to the housing 210 by rivetless riveting. In this case, the three lips 231 of the first sealing element 230 closely fits the surface of the mounting groove 223 and the inner wall of the housing 210 to form a first seal. The second sealing element 240 closely fits the opening 214 and the surface of the groove 225 to form a second seal. In this way, the sealing process for the battery 10 is completed. Subsequently, the battery housing structure 200 may be connected to an external component by a connecting portion 222. This embodiment reduces sealing complexity of the battery 10 and improves production efficiency of the battery 10. In addition, the battery housing structure 200 in this embodiment of this application is especially suitable for small-sized batteries 10. The battery 10 packaged in the battery housing structure 200 can achieve good sealing performance and avoid the problems of burrs, gas cavities, and cracks. In specific applications, such small-sized batteries may be combined to form a higher-power large battery to meet the practical requirement of a high power output. When the batteries are combined into a large battery, because each individual small-sized battery has already met the sealing requirement, the large battery does not need to undergo a sealing process anymore.

A second aspect of this application discloses a battery 10. The battery includes the battery housing structure 200 according to the first aspect and at least one battery cell 100. The battery cell 100 is disposed in a tubular structure.

For the battery 10 according to an embodiment of this application, the battery housing structure 200 is relatively simple. The housing 210 in the battery housing structure 200 is a one-piece tubular structure without discrete side plates, top plates, bottom plates, and the like, and therefore, does not need to undergo a sealing process. The housing 210 may be processed in diverse ways. After a plurality of battery cells 100 are put into the housing 210 structure, the sealing of the battery 10 can be performed by just fitting the end plate 220 to the opening 214 of the housing 210 hermetically by use of the first sealing element 230. This reduces the sealing complexity of the battery 10 and improves the production efficiency of the battery 10. In addition, the battery 10 according to this embodiment of this application may be a small-sized battery. When the battery 10 is small in size, the size of a sealing interface of the battery 10 is relatively small. In this case, the battery packaged in the battery housing structure 200 can achieve good sealing performance and avoid the problems of burrs, gas cavities, and cracks. In specific applications, such small-sized batteries may be combined to form a higher-power large battery to meet the practical requirement of a high power output. When the batteries are combined into a large battery, because each individual small-sized battery has already met the sealing requirement, the large battery does not need to undergo a sealing process anymore.

As shown in FIG. 3, in some embodiments of this application, the battery 10 further includes a cable containment system assembly 400 disposed in the battery housing structure 200. The cable containment system assembly 400 includes a fender 410 and a conductive connecting strip 420 disposed on the fender 410. The conductive connecting strip 420 is electrically connected to an electrode post 140 of the battery cell 100.

The cable containment system assembly 400 (CCS for short) is generally located above the battery cell 100. The functions of the cable containment system assembly 400 generally include: implementing series-and-parallel connection between the battery cells 100; mounting and fixing the sampling line; connecting battery information acquisition signals; guiding and exhausting gas, and the like.

The electrode post 140 is a component electrically connected to a positive electrode or negative electrode in the battery 10. Generally, there are two electrode posts 140 on one battery cell 100. The electrode posts 140 of adjacent battery cells 10 in the battery 10 are usually connected by a conductive connecting strip 420. The electrode post 140 is typically made of materials such as lead, electroplated brass, electroplated red copper, or copper.

The conductive connecting strip 420 is a conductive structure configured to implement series connection and/or parallel connection between a plurality of battery cells 100. The conductive connecting strip 420 is usually connected to the electrode post 140 of the battery cell 100 by welding. Typical conductive connecting strips 420 include nickel-plated copper connecting strip, pure nickel connecting strip, nickel-plated steel connecting strip, and the like.

The fender 410 plays a role of insulation to prevent electrical components from being short-circuited.

The cable containment system assembly 400 is a basic component of a battery module or a battery pack.

As shown in FIG. 3, in some embodiments of this application, the battery further includes a plug 260 electrically connected to the cable containment system assembly. A hole 2601 for receiving the plug 260 and a connecting piece 2602 are arranged on the end plate 220. The plug 260 is configured to be connected to an external component, so as to supply power to the external component. The connecting piece 2602 may be a bolt, a screw, or the like.

As shown in FIG. 3, in some embodiments of this application, the battery further includes a dielectric film 270. The dielectric film 270 is located between the battery cell 100 and the battery housing structure 200, so as to insulate the plurality of battery cells 100 from the battery housing structure 200.

According to some embodiments of this application, preferably, this application discloses a battery 10, including a plurality of stacked battery cells 100, a battery housing structure 200, a cable containment system assembly 400, a dielectric film 270, and the like.

The battery housing structure 200 includes a housing 210, an end plate 220, a first sealing element 230, and a second sealing element 240. On different sides on the outer surface of the housing 210, a first convex rib 212 and a second convex rib 213 are integrally disposed respectively along the length direction. The interior of the housing 210 is configured to accommodate the battery cell 100. The end plate 220 includes a plate body 221 and a stopping flange 224 located at an end of the plate body 221, the end being away from the battery cell 100. A recessed region 227 is formed on a side of the stopping flange 224. A reinforcing rib 228 and a positioning hole 2291 are disposed in the recessed region 227. The stopping flange 224 of the end plate 220 extends on one side to form a connecting portion 226. A mounting groove 223 is created in an end of the plate body 221, the end going deep into the housing 210. In addition, a tapered guide portion 222 is disposed at a part of the plate body 211, the part being closer to the opening 214 of the housing 210. The first sealing element 230 includes three sealing lips 231. The stopping flange 224 of the end plate 220 is bent so that a groove 225 is jointly defined by the stopping flange and the plate body 221. The second sealing element 240 may be disposed in the groove 225.

A sealing process for the battery 10 in this embodiment of this application includes: fitting a plurality of battery cells 100, the cable containment system assembly 400, and the dielectric film 270 into the housing 210; mounting the first sealing element 230 in the mounting groove 223 of the end plate 220; placing the second sealing element 240 in the groove 225 of the end plate 220; putting the plate body 221 of the end plate 220 into the opening 214 of the housing 210 through the reverse bevel; and then inserting an external jig into the positioning hole 2291, so that the end plate 220 is squeezed by the external jig into the opening 214 of the housing 210 until the stopping flange 224 abuts the first convex rib 212 that plays a limiting role. In this way, the sidewall of the recessed region 227 is connected to the housing 210 by rivetless riveting. In this case, the three lips 231 of the first sealing element 230 closely fits the surface of the mounting groove 223 and the inner wall of the housing 210 to form a first seal. The second sealing element 240 closely fits the opening 214 and the surface of the groove 225 to form a second seal. In this way, the sealing process for the battery 10 is completed, and then the battery 10 may be connected to an external component by a connecting portion 222. This embodiment reduces sealing complexity of the battery 10 and improves production efficiency of the battery 10.

Athird aspect of this application discloses an electrical device. The electrical device includes the battery 10 described above.

In the electrical device according to an embodiment of this application, the sealing structure of the battery 10 used in a power supply system in the electrical device is relatively simple. The housing 210 in the battery housing structure 200 of the battery 10 is a one-piece tubular structure without discrete side plates, top plates, bottom plates, and the like, and therefore, does not need to undergo a sealing process. The housing 210 may be processed in diverse ways. After a plurality of battery cells 100 are put into the housing 210 structure, the sealing of the battery 10 can be performed by just fitting the end plate 220 to the opening 214 of the housing 210 hermetically by use of the first sealing element 230. This reduces the sealing complexity of the battery 10, and improves the production efficiency of the battery 10.

A fourth aspect of this application discloses a method for manufacturing a battery housing structure 200, including:
providing a housing, where the housing is a tubular structure with an opening at an end;
providing an end plate, where the end plate is mounted at an end of the housing, the housing and the end plate jointly define an accommodation space, and a plurality of battery cells are disposed in the accommodation space; and
providing a first sealing element, where the first sealing element is disposed between the end plate and the housing so that the accommodation space is hermetically sealed.

The sealing structure of the battery housing structure 200 manufactured by the method for manufacturing a battery housing structure 200 according to this application is relatively simple. The housing 210 in the battery housing structure 200 is a one-piece tubular structure without side plates, top plates, bottom plates, and the like, and therefore, does not need to undergo a sealing process. The housing 210 may be processed in diverse ways. After a plurality of battery cells 100 are put into the housing 210 structure, the sealing of the battery 10 can be performed by just fitting the end plate 220 to the opening 214 of the housing 210 hermetically by use of the first sealing element 230. This reduces the sealing complexity of the battery 10, and improves the production efficiency of the battery 10.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery housing structure, wherein a battery in the battery housing structure comprises at least one battery cell, **characterized in that** the battery housing structure comprises:
a housing, wherein the housing is a tubular structure with an opening at an end, and the tubular structure is configured to accommodate the battery cell;
an end plate, wherein the end plate is mounted at an end of the housing, the housing and the end plate jointly define an accommodation space, and the battery cell is disposed in the accommodation space; and
a first sealing element, wherein the first sealing element is disposed between the end plate and the housing so that the accommodation space is hermetically sealed.

2. The battery housing structure according to claim 1, **characterized in that** the end plate comprises a plate body, the plate body is inserted in the opening of the housing, and a tapered guide portion is disposed at an end of the plate body, the end being located deep inside the housing.

3. The battery housing structure according to claim 2, **characterized in that** a mounting groove is created in the plate body, and the first sealing element is disposed in the mounting groove.

4. The battery housing structure according to claim 2, **characterized in that** the first sealing element comprises a plurality of sealing lips, and all the plurality of sealing lips closely abut an inner wall of the housing.

5. The battery housing structure according to claim 4, **characterized in that** the first sealing element comprises three sealing lips, and the three sealing lips are arranged in parallel along a direction perpendicular to a plane of the opening.

6. The battery housing structure according to claim 3, **characterized in that** a plurality of bulges are disposed on a surface of the first sealing element, the surface being in contact with the mounting groove.

7. The battery housing structure according to claim 2, **characterized in that**, the battery housing structure further comprises a second sealing element, and the second sealing element is located outside the first sealing element.

8. The battery housing structure according to claim 7, **characterized in that** the end plate further comprises a stopping flange disposed at an end of the plate body, the end being away from the battery cell; the stopping flange is bent so that a groove is jointly defined by the stopping flange and the plate body; and the second sealing element is disposed in the groove.

9. The battery housing structure according to claim 8, **characterized in that** a stopper is disposed on an outer surface of the housing, and the stopper abuts the stopping flange to limit an insertion depth of the plate body into the opening.

10. The battery housing structure according to claim 9, **characterized in that** the stopper is a first convex rib that extends along a length direction of the housing.

11. The battery housing structure according to claim 8 or 9, **characterized in that** the end plate further comprises a connecting portion; the connecting portion is disposed on a side of the stopping flange, the side being away from the plate body; and a plurality of mounting holes are created in the connecting portion and configured to be connected to an external structure.

12. The battery housing structure according to claim 2, **characterized in that** a recessed region is formed on a side of the plate body, the side being away from the battery cell; and a sidewall of the recessed region is connected to the housing by rivetless riveting or by a fastener.

13. The battery housing structure according to claim 12, **characterized in that** a reinforcing rib is disposed in the recessed region, and/or, a positioning rod with a positioning hole is disposed in the recessed region and configured to be connected to an external jig.

14. The battery housing structure according to any one of claims 1 to 10, **characterized in that**, a second convex rib that extends along a length direction and/or width direction of the housing is further disposed on an outer surface of the housing, and the second convex rib is configured to work together with an external structure to jointly define a heat dissipation channel.

15. A battery, **characterized in that** the battery comprises the battery housing structure according to any one of claims 1 to 14 and at least one battery cell, and the battery cell is disposed in the tubular structure.

16. The battery according to claim 15, **characterized in that**, the battery further comprises a cable containment system assembly disposed in the battery housing structure, the cable containment system assembly comprises a fender and a conductive connecting strip disposed on the fender, and the conductive connecting strip is electrically connected to an electrode post of the battery cell.

17. An electrical device, **characterized in that** the electrical device comprises the battery according to claim 15 or 16.

18. A method for manufacturing a battery housing structure, **characterized in that** the method comprises:
providing a housing, wherein the housing is a tubular structure with an opening at an end;
providing an end plate, wherein the end plate is mounted at an end of the housing, the housing and the end plate jointly define an accommodation space, and a plurality of battery cells are disposed in the accommodation space; and
providing a first sealing element, wherein the first sealing element is disposed between the end plate and the housing so that the accommodation space is hermetically sealed.
